# EUROPÄISCHE PATENTSCHRIFT

(11) **EP 2 625 769 B1**
(45) Veröffentlichungstag und Bekanntmachung des Hinweises auf die Patenterteilung: **10.06.2015**
(21) Anmeldenummer: 11749168.8
(22) Anmeldetag: 26.08.2011
(51) Int. Cl.: H02K 1/18

(54) **SPANNSCHEIBE ZUM BEFESTIGEN EINES STATORS IM GEHÄUSE EINER ELEKTRISCHEN MASCHINE**
CONICAL SPRING WASHER FOR MOUNTING A STATOR IN THE HOUSING OF AN ELECTRICAL MACHINE
RONDELLE DE SERRAGE POUR FIXER UN STATOR DANS LE CARTER D'UNE MACHINE ÉLECTRIQUE

(30) Priorität: 07.10.2010 DE 102010042133
(43) Veröffentlichungstag der Anmeldung: 14.08.2013
(73) Patentinhaber: Robert Bosch GmbH, 70442 Stuttgart (DE)
(72) Erfinder: THIERY, Jerome, F-67100 Strasbourg (FR); SCHMID, Joerg, 77855 Achern (DE); MAHFOUDH, Samir, 77815 Buehl (DE); HEIER, Christoph, 76473 Iffezheim (DE); MUSCHELKNAUTZ, Claudius, 77815 Buehl (DE); KOENIG, Tilo, 77815 Buehl (DE)
(86) Internationale Anmeldenummer: PCT/EP2011/064747
(87) Internationale Veröffentlichungsnummer: WO 2012/045525

(56) Entgegenhaltungen:
- DE-A1- 4 215 463
- DE-T2- 60 028 427
- US-A- 5 481 148
- US-A1- 2010 301 691

## Beschreibung

Die Erfindung betrifft eine Spannscheibe zum Befestigen eines Stators im Gehäuse einer elektrischen Maschine, insbesondere einer Kühlkreislaufpumpe in einem Fahrzeug. Ferner betrifft die Erfindung eine elektrische Maschine mit einer solchen Spannscheibe.

### Stand der Technik

Elektrische Maschinen kommen in verschiedenen technischen Anwendungen zum Einsatz. So bildet beispielsweise ein EC-Motor mit einem rotierenden Rotor und einem ortsfest innerhalb des Maschinengehäuses angeordneten Stator den elektrischen Teil einer Kühlkreislaufpumpe. Hierbei ist der zum Zwecke der Wirbelstromreduktion aus gestanzten, zueinander isolierten Blechen gebildete Stator mittels Verschraubungen, axialer oder radialer Verspannungen, Klebeverbindungen, Einschrumpfungen oder Einpressungen bzw. mittels einer Kombination mehrere Methoden mechanisch mit dem Gehäuse verbunden. Viele dieser Methoden haben verschiedene Nachteile. Die Verwendung von Schraubverbindungen zur Befestigung des Stators ist beispielsweise relativ bauraum- und kostenintensiv. Darüber hinaus ist die Vorspannkraft einer Schraubverbindung sehr temperaturabhängig und nimmt bei Temperaturwechselbelastung nach relativ kurzer Zeit stark ab, so dass sich der Stator abhängig von seinen Massekräften relativ stark bewegen kann. Während des Betriebs des Motors erzeugen die wechselnden elektromagnetischen Felder ständig wechselnde Belastungen an den elektrisch und magnetisch leitenden Motorkomponenten. Insbesondere der Stator ist dabei hohen mechanischen Belastungen ausgesetzt, die bei nicht ausreichender Fixierung zu Schüttelbewegung des Stators führt. Ferner führen auch die stark unterschiedliche thermischen Ausdehnung zwischen Kunststoff als Material des Gehäuses und Metall als Material des Blechpakets zu relativ großen Toleranzen insbesondere bei hohen Temperaturen und es somit zu unerwünschten Bewegungsfreiräumen zwischen den Komponenten.

Abhängig von der Steifigkeit und Verbindungstechnik der einzelnen Komponenten können die auf den Stator wirkenden Belastungen als Schwingungen auf andere Komponenten des Motors übertragen werden. Dabei reagieren insbesondere die zwischen den Stator und Leiterplatte angeordneten Kontaktpins sehr empfindlich auf wechselnde mechanische Belastungen. Um ein Versagen dieser kritischen Kontakte zu verhindern, ist es notwendig entsprechende Maßnahmen zur Reduktion der Schwingungsübertragung vorzusehen. So werden beispielsweise spezielle Dämpfungselemente zur gezielten Dämpfung der Schwingungsanregungen eingesetzt. Die bekannten Dämpfungselemente erlauben jedoch nur einen geringen Toleranzausgleich. Je nach Aufbau und verwendetem Material haben die Dämpfungselemente nur einen begrenzten Einsatztemperaturbereich. Alternative Dämpfungskonzepte erweisen hingegen als sehr aufwändig.

Aus der US 5 481 148 und der DE 600 28 427 T2 sind herkömmliche Spannscheiben zum Befestigen eines Stators im Gehäuse einer elektrischen Maschine bekannt.

Es ist daher Aufgabe der Erfindung eine Befestigung des Stators im Motorgehäuse bereitzustellen, die eine sichere Fixierung des Stators ermöglicht und gleichzeitig einen Ausgleich von Bewegungen des Stators schafft. Diese Aufgabe wird durch eine elektrische Maschine nach Anspruch 1 gelöst. Weitere vorteilhafte Ausführungsformen der Erfindung sind in den abhängigen Ansprüchen angegeben.

### Offenbarung der Erfindung

Gemäß der Erfindung ist eine elektrische Maschine umfassend ein Gehäuse, einen im Gehäuse angeordneten Stator und eine den Stator mittels einer axialen Federkraft in seiner Montageposition haltende Spannscheibe. Die Spannscheibe umfasst dabei einen mittels einer Befestigungseinrichtung an einer Gehäuseinnenwand befestigten ringförmigen Grundkörper sowie eine Anzahl sich vom ringförmigen Grundkörper in Richtung des Stators erstreckender und den Stator mittels einer vorgegebenen Federkraft axial abstützender Federstrukturen. Durch die axiale Abstützung des Stators mittels Federstrukturen können Bewegungen des Stators, wie z.B. thermisch bedingte Ausdehnungsprozesse, sowie fertigungsbedingte Toleranzen ausgeglichen werden. Gleichzeitig wird mittels der Spannscheibe eine spielfreie Fixierung des Stators im Gehäuse gewährleistet.

Die Federstrukturen wirken sich ferner dämpfend auf hohe Schwingungsbeschleunigungen des Stators aus. Die Spannscheibe erlaubt ferner eine einfache Vorfinanzierung des Stators vor der Montage des Rotors. Mithilfe der erfindungsgemäßen Spannscheibe kann über einen großen Temperaturbereich eine konstante Vorspannkraft erreicht werden.

In einer Ausführungsform ist vorgesehen, dass die Federstrukturen in Form gebogener Blechzungen ausgebildet sind. Solche Blechzungen lassen sich besonders leicht herstellen. Durch Wahl des geeigneten Materials, der Dicke, der Breite und der Krümmung der Blechzungen können die Federeigenschaften der Federstrukturen den jeweiligen Erfordernissen leicht angepasst werden.

In einer weiteren Ausführungsform ist vorgesehen, dass die Federstrukturen spiralförmig um den ringförmigen Grundkörper herum gebogen sind. Die flache Kennlinie der Spiralfeder erlaubt einen für den Toleranzausgleich benötigten größeren Federweg unter optimaler Ausnutzung des Bauraums. Somit ist es mithilfe der spiralförmig ausgebildeten Federstrukturen möglich das für die jeweilige Anwendung benötigte Federungsverhalten gezielt einzustellen.

Eine weitere Ausführungsform sieht vor, dass die Spannscheibe wenigstens ein Begrenzungselement zum Begrenzen der maximalen Kompression der Federstrukturen umfasst. Mithilfe des Begrenzungselements kann auf eine besonders einfache Weise die maximale Federkraft eingestellt werden. Dies ermöglicht einerseits eine Überwachung der Montagekraft während des Einsetzens der Spannscheibe in die Gehäusekammer. Anderseits wird mittels des Begrenzungselements sichergestellt, dass die Feder nicht übermäßig beansprucht wird. Hierdurch kann die Gefahr für ein Materialversagen reduziert werden.

Eine weitere Ausführungsform sieht vor, dass das Begrenzungselement durch einen in Richtung des ringförmigen Grundkörpers gebogenen Endabschnitt der Federstruktur gebildet wird, welcher beim Erreichen der maximalen Kompression auf einer Anschlagfläche des ringförmigen Grundkörpers zum Liegen kommt. Ein solches Begrenzungselement lässt sich besonders einfach und kostengünstig herstellen.

In einer weiteren Abwandlung ist vorgesehen, dass die Befestigungseinrichtung in Form einer entlang des Außenumfangs des ringförmigen Grundkörpers angeordneten Spreizeinrichtung ausgebildet ist. Die Spreizeinrichtung ist dabei derart radial gestaucht innerhalb des Gehäuses angeordnet, dass ein von der Spreizeinrichtung auf die Gehäuseinnenwand ausgeübter Druck eine Fixierung der Spannscheibe im Gehäuse bewirkt. Diese Art der Befestigung erlaubt einen optimalen Ausgleich radialer Ausdehnung des Gehäuses. Eine Spreizeinrichtung erlaubt ferner eine einfache Montage, da durch die Spreizung der Spreizeinrichtung die in das Gerätegehäuse eingesetzte Spannscheibe automatisch fixiert wird. Diese einfache Fixierung der Spannscheibe erlaubt ferner die Befestigung des Stators nachträglich zu justieren. Nicht zuletzt lässt sich eine Spreizeinrichtung auch sehr einfach und kostengünstig in einem Umformprozess aus einem geeigneten Blech herstellen. Schließlich wird durch die Verwendung einer Spreizeinrichtung die Vorspannkraft der Bestandteile nicht auf andere Verbindungen weitergeleitet, wie zum Beispiel die Schraubverbindung zwischen dem Pumpengehäuse und zwischen Gehäuse oder andere Kunststoff-Verbindungen.

In einer vorteilhaften Abwandlung umfasst der Spreizeinrichtung mehrere sternförmig entlang des Außenumfangs des ringförmigen Grundkörpers angeordnete Spreizflügel. Dabei lassen sich die Spreizflügel derart radial gestaucht innerhalb des Gehäuses anordnen, dass ein von den Spreizflügeln auf die Gehäuseinnenwand ausgeübter Druck eine Fixierung der Spannscheibe im Gehäuse bewirkt. Aufgrund der höheren Federwirkung der einzelnen Spreizflügel gegenüber dem geschlossenen Spreizkragen ist mithilfe der Spreizflügel eine verbesserte Befestigung der Spannscheibe möglich. Ferner kann mithilfe der Spreizflügel gezielt festgelegt werden, wie die Kräfte des Stators über die Spannscheibe an das Gehäuse weiter gegeben werden und vice versa.

In einer weiteren Abwandlung ist vorgesehen, dass die Spreizflügel unmittelbar im Bereich der Federstrukturen angeordnet sind. Hierdurch wird die Kraftübertragung zwischen Gehäuse und Stator verbessert.

Eine weitere Ausführungsform sieht vor, dass der ringförmige Grundkörper vertiefte Abschnitte aufweist, die in einen Zwischenraum zwischen jeweils zwei Polschuhen des Stators eingreifen. Dabei sind die Federstrukturen in den vertieften Abschnitten des ringförmigen Grundkörpers angeordnet. Hierdurch wird die Bauhöhe der Spannscheibe verringert was letztendlich mit einer geringeren Bauhöhe der elektrischen Maschine einhergeht.

Eine weitere Ausführungsform sieht vor, dass die Spannscheibe als ein mittels eines Stanzprozesses aus einem Federstahl erzeugtes Bauteil ausgebildet ist. Eine derartige Spannscheibe lässt sich kostengünstig herzustellen. Die Verwendung von Federstahl ermöglicht eine optimale und langlebige Federfunktion.

Schließlich sieht eine weitere Ausführungsform vor, dass die elektrische Maschine als Antrieb für ein Aggregat in einem Kraftfahrzeug ausgebildet ist. Mithilfe der erfindungsgemäßen Spannscheibe können die typischerweise im Betrieb eines Kraftfahrzeugs auftretenden Belastungen besonders gut kompensiert werden.

Im Folgenden wird die Erfindung anhand von Zeichnungen näher beschrieben. Es zeigen:
Fig. 1 eine perspektivische Ansicht einer teilmontierten erfindungsgemäßen elektrischen Maschine mit einer den Stator fixierenden Spannscheibe;
Fig. 2 eine Querschnittansicht der elektrischen Maschine aus Figur 1;
Fig. 3 eine schematische Querschnittansicht der erfindungsgemäßen elektrischen Maschine;
Fig. 4 eine Detailansicht der erfindungsgemäßen Spannscheibe aus Figur 3 zur Verdeutlichung der Befestigung;
Fig. 5 eine weitere Detailansicht der erfindungsgemäßen Spannscheibe aus Figur 3 zur Verdeutlichung des Verhaltens bei radialer Ausdehnungen des Gehäuses;
Fig. 6 eine perspektivische Darstellung der Oberseite einer erfindungsgemäßen Spannscheibe mit einem umlaufenden Kragenelement;
Fig. 7 eine perspektivische Darstellung der Unterseite der erfindungsgemäßen Spannscheibe;
Fig. 8 eine Querschnittdarstellung der erfindungsgemäßen Spannscheibe mit einem Begrenzungselement zur Begrenzung der maximalen Kompression der Federstrukturen;
Fig. 9 eine Detailansicht des Begrenzungselements aus Figur 8;
Fig. 10 eine weitere Ausführungsform der erfindungsgemäßen Spannscheibe mit sternförmig entlang des Außenumfangs des Grundkörpers angeordneten Spreizflügeln;
Fig. 11 eine Explosionsansicht der erfindungsgemäßen elektrischen Maschine;
Fig. 12 eine perspektivische Ansicht der erfindungsgemäßen elektrischen Maschine aus Figur 11 nach dem Zusammenbau;
Fig. 13 eine weitere Ausführungsform der erfindungsgemäßen Spannscheibe mit vertieften Abschnitten zur besseren Ausnutzung des vorhandenen Bauraums;
Fig. 14 eine weitere Ausführungsform der erfindungsgemäßen Spannscheibe mit vertieften Abschnitten;
Fig. 15 eine teilmontierte elektrische Maschine mit der Spannscheibe aus Figur 14;
Fig. 16 eine spezielle Ausführungsform der erfindungsgemäßen Spannscheibe mit spiralförmig gebogenen Federstrukturen;
Fig. 17 Querschnittdarstellungen einer spiralförmig gebogenen Federstruktur im unbelasteten und belasteten Zustand;
Fig. 18 eine spezielle Ausführungsform der erfindungsgemäßen Spannscheibe mit spiralförmig gebogenen Federstrukturen und vertieften Abschnitten.

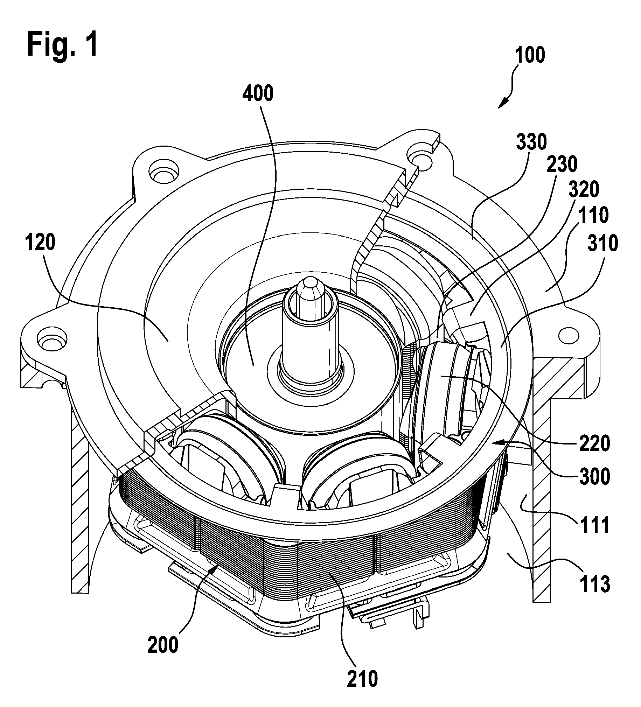

Die **Figur 1** zeigt eine perspektivische Ansicht der erfindungsgemäßen elektrischen Maschine 100. Die im vorliegenden Beispiel als Antriebskomponente einer Flüssigkeitspumpe, insbesondere eine Kühlkreislaufpumpe, ausgebildete elektrische Maschine ist dabei in einem teilweise aufgeschnittenen Zustand gezeigt. Die elektrische Maschine 100 umfasst ein aus einem geeigneten Material, wie zum Beispiel Kunststoff oder Metall gefertigtes Gehäuse 110 mit einer eine im Wesentlichen runden Querschnitt aufweisenden Innenkammer 113, einen in der Gehäusekammer angeordneten ringförmigen Stator 200 sowie einen in den ringförmigen Stator 200 eingreifenden Rotor 400. Bei der hier gezeigten Flüssigkeitspumpe ist der Rotor innerhalb eines die flüssigkeitsumspülte Rotorkammer von der Statorkammer trennenden Zwischengehäuses angeordnet. Das Zwischengehäuse wird dabei von einem die Gehäusekammer einseitig verschließenden Deckelelement gebildet. Der Stator 200 ist in seiner Montageposition erfindungsgemäß mittels einer Spannscheibe 300 fixiert. Wie in der Figur 1 gezeigt ist, umfasst die Spannscheibe 300 dabei einen ringförmigen Grundkörper 310 mit mehreren entlang des ringförmigen Grundkörpers 310 verteilt angeordneten und den Stator 200 jeweils mit vorgegebenen Bereichen zwischen den Polschuhen abstützenden Federstrukturen 320. Ferner umfasst die vorzugsweise aus Federstahl gebildete Spannscheibe 300 eine zur Befestigung im Gehäuse 110 dienende Befestigungseinrichtung 330. die Befestigung der Bestandteile im Motorgehäuse wird mittels eines Radialübermaßes zwischen Spannscheibe und Motorgehäuse realisiert. Hierzu ist die Befestigungseinrichtung 330 als eine Spreizeinrichtung ausgebildet, welche einen größeren Außendurchmesser aufweist als der Innendurchmesser der Gehäusekammer 113 und daher radial gestaucht innerhalb der Gehäusekammer angeordnet wird. Durch die radiale Spannkraft, welche das Spreizelement 330 dabei auf die Gehäuseinnenwand 111 ausübt, bzw. durch die damit verbundene Reibkraft wird die Spannscheibe innerhalb der Gehäusekammer verankert. Im vorliegenden Ausführungsbeispiel ist die Spreizeinrichtung in Form eines umlaufenden Spreizkragens ausgebildet.

Die Federstrukturen 320 sind vorzugsweise als aus dem ringförmigen Grundkörper 310 entspringende Blechstreifen ausgebildet, die nach unten in Richtung des Stators gebogen sind. Die Spannscheibe 300 ist dabei so positioniert, dass die Federstrukturen 320 den Stator 200 stirnseitig mit einer vorgegebenen Federkraft F_{A} abstützen und ihn so in der vorgesehenen Montageposition sichern.

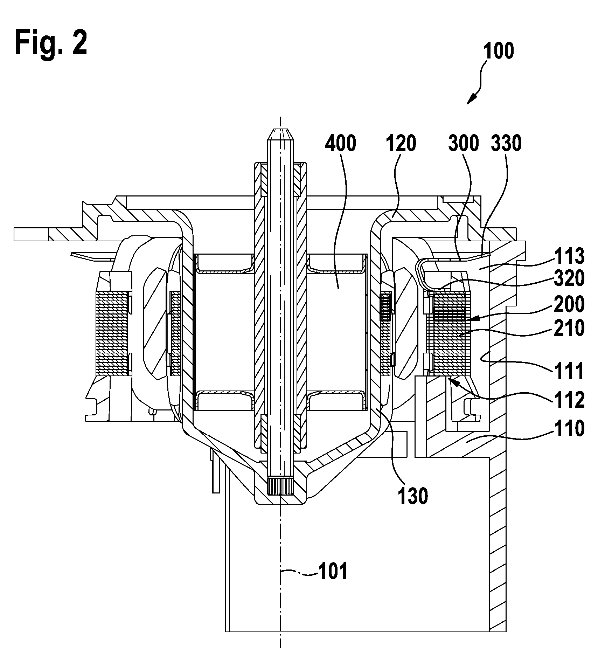

Zur Verdeutlichung der Statorbefestigung zeigt die **Figur 2** eine Schnittdarstellung durch die elektrische Maschine 100 aus der Figur 1. Der Stator 200 ist dabei mit seiner der Spannscheibe 300 entgegen gesetzten Seite auf einen eine Aufnahme des Stators bildenden Gehäuseteil 112 abgestützt. Durch den von der Federscheibe 300 ausgeübten Druck wird der Stator 200 gegen den Gehäuseteil 112 gedrückt. Aufgrund der elastischen Eigenschaften der Federstrukturen 320 und der Spreizelemente 330 bewirkt die Spannscheibe 300 sowohl eine spielfreie Fixierung des Stators 200 als auch einen axialen Toleranzausgleich zwischen Stator 200 und Gehäuse 110. Daher kann das unterschiedliche thermische Ausdehnungsverhalten des Stators 200 und des Gehäuses 110 effektiv kompensiert werden.

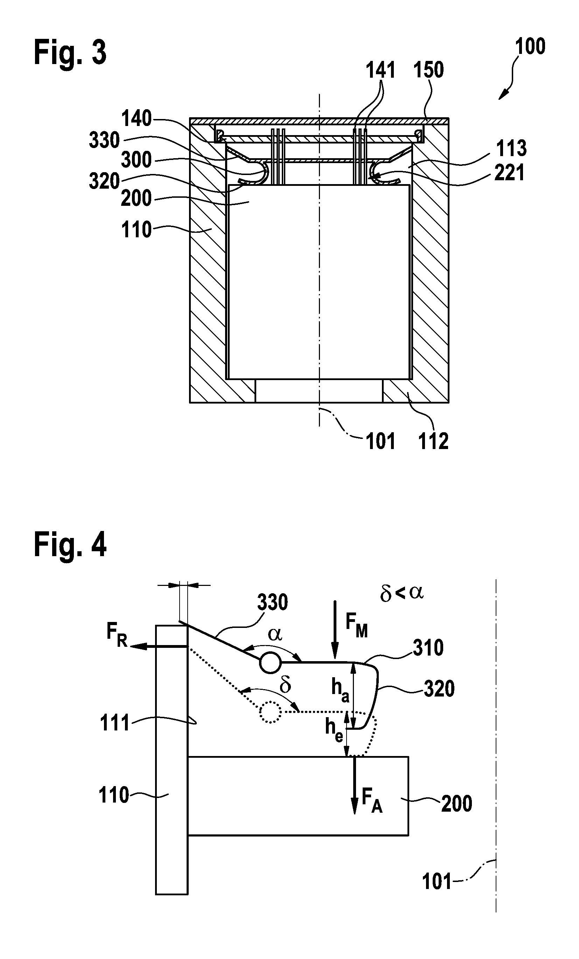

Zur Verdeutlichung der speziellen Befestigungsweise des Stators zeigt die **Figur 3** eine schematische Schnittdarstellung durch eine erfindungsgemäße elektrische Maschine 100. Wie bereits in Zusammenhang mit den Figuren 1 und 2 erläutert, ist der Stator 200 in einer inneren Kammer 113 des Gehäuses 110 untergebracht. Der mit seinem unteren Teil liegt der Stator 200 dabei auf dem als Aufnahme dienenden unteren Gehäuseteil 112 und wird in seinem oberen Teil von der in die Gehäusekammer 113 eingesetzten Spannscheibe 300 begrenzt. Die Fixierung der Spannscheibe im Gehäuse erfolgt mittels der im Gehäuse radial gestaucht untergebrachten Spreizeinrichtung 330. Durch die Spreizkräfte werden die äußeren Kanten der Spreizeinrichtung 330 gegen die Gehäuseinnenwand 111 gedrückt und verkrallen so die Spannscheibe 300 im Gehäuse.

Die zur Fixierung des Stators vorgesehenen Federelemente 320 stützen den Stator 200 mit einer axial in Richtung des Stators wirkenden Federkraft stirnseitig ab. Diese Federkraft wird bei der Montage mit der Spannscheibe 300 vorgegeben und kann den jeweiligen Anforderungen angepasst werden. Die elastische Abstützung erlaubt eine axiale Ausdehnung des Stators und bewirkt gleichzeitig einen Toleranzausgleich zwischen Gehäuse 110, Stator 200 und Spannscheibe 300. So können beispielsweise Fertigungstoleranzen der verschiedenen Bauteile, wie Blechpakethöhe, axialer Anschlag am Motorgehäuse oder Durchmesser des Motorgehäuses ausgeglichen werden. Darüber hinaus können hiermit auch thermisch bedingte Ausdehnungsprozesse des Blechpakets in axialer Richtung besonders einfach kompensiert werden. Jedoch können durch die elastischen Eigenschafen der Spannscheibe auch dynamische Kräfte des Stators, wie sie beispielsweise durch Vibrationen der Maschine oder durch elektromagnetische Momente während des Betriebes entstehen, wirksam aufgefangen werden.

Die Wicklungen des Stators (hier nicht gezeigt) sind elektrisch an eine Leiterplatte 140 angeschlossen, die deckelartig im oberen Bereich der Gehäusekammer angeordnet ist. Die Kontaktierung erfolgt mittels stiftförmigen Kontaktpins 141, die elektrisch mit der Leiterplatte 140 verbunden sind. Solche Kontaktpins 141 stellen typische Schwachstellen der elektrischen Stromkreise dar. Unter anderem können die Lötstellen der Kontaktpins 141 durch wechselnde Bewegung des Stators mechanisch geschwächt werden. Da durch die elastische Abstützung mittels der Spannscheibe die Vibrationen des Stators deutlich reduziert werden, verringert sich auch die Gefahr einer mechanischen Schwächung der Kontaktpins und eines damit verbundenen Ausfalls der entsprechenden elektrischen Verbindungen.

Im Folgenden wird die Befestigung der Spannscheibe 300 innerhalb des Gehäuses 110 näher erörtert. Hierzu zeigt die **Figur 4** schematisch eine Teilansicht der Spannscheibe 300 aus der Figur 3 vor und nach der Montage innerhalb des Gehäuses 110. Die hier dargestellte Anordnung ist rotationssymmetrisch, was mittels der angedeuteten Rotationsachse 101 verdeutlicht wird. Im ausgebauten Zustand der Spannscheibe 300 schließt das nach oben gebogene Spreizelement 330 mit dem Grundkörper 310 einen stumpfen Winkel α ein. Wie hier dargestellt ist, ist der Außendurchmesser der Spannscheibe 300 dabei etwas größer ausgebildet als der Innendurchmesser des Gehäuses 110, sodass die Spreizeinrichtung 330 geringfügig über die Gehäusekammer hinausragt. Das in Form einer gebogenen Blechzunge ausgebildete Federelement 320 weist im entspannten Zustand eine bestimmte Bauhöhe hₐ auf.

Zur Montage der Spannscheibe 300 wird diese durch Aufbringen einer Montagekraft F_{R} in die Gehäusekammer 113 hineingedrückt, bis der untere Abschnitt des Federelements 320 auf dem Stator 200 aufsetzt. Durch weiteres Hinunterdrücken kommt es zu einer Kompression des Federelements 320. Das elastisch vorgespannte Federelement 320 übt nunmehr eine den Stator 200 in seiner Aufnahme fixierende axiale Anpresskraft F_{A} auf einen oberen Bereich des Stators 200 aus. Wie in der Figur 4 mittels der gestrichelten Linie gezeigt ist, fällt die Bauhöhe hₑ des Federelements 320 im montierten Zustand geringer aus.

Wie ferner in der Figur 4 dargestellt ist, wird die Spannscheibe 300 durch das Hineindrücken in die Gehäusekammer die Spannscheibe radial gestaucht. Diese Stauchung wird vorzugsweise durch eine elastische Verbiegung des Spreizelements 330 erreicht. Aus der Zeichnung ist ersichtlich, dass der Winkel δ zwischen dem Spreizelement 330 und dem ringförmigen Grundkörper 310 der Spannscheibe kleiner ist als der Winkel α. Wie mittels eines Pfeils angedeutet ist, übt das elastisch verformte Spreizelement 330 nun eine bestimmte Kraft F_{R} auf die Gehäusewand 111 aus, durch die die Spannscheibe 300 innerhalb der Gehäusekammer verankert wird. Die Höhe dieser Spreizkraft hängt in erster Linie von den Eigenschaften des Spreizelements 330, wie z. B. dem Material und der Stärke des verwendeten Blechs, der axialen Länge des Spreizelements oder der Stärke der Biegung des Spreizelements ab.

Während kleinere Rotorbewegungen, wie z. B. die typischer Weise im Betrieb auftretenden Vibrationen, bereits mithilfe der Federelemente 320 ausgeglichen werden können, erlauben die als zusätzliche Federelemente wirkenden elastischen Spreizelemente auch eine effektive Kompensation größerer Axialbewegungen des Rotors, wie z. B. eine im intensiven Betrieb des Motors auftretende thermische Ausdehnung des Blechstapels.

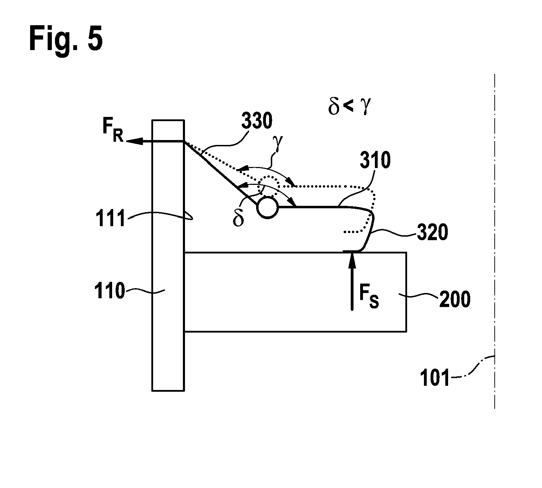

Wie in der **Figur 5** gezeigt ist, kann das Spreizelement 330 durch seine elastischen Eigenschaften ein Anheben der Spannscheibe durch den Rotor im Wesentlichen kompensieren, ohne dass sich der Verankerungspunkt des Spreizelements 330 an der Gehäuseinnenwand 111 verschiebt. Die vom Stator auf den Spannring wirkende Kraft F_{S} wird dabei über das Federelement 320, den ringförmigen Grundkörper 310 und das Spreizelement 330 auf die Gehäuseinnenwand 111 abgeleitet, so dass sich dabei lediglich der Spreizwinkel zwischen dem Spreizelement 330 und dem ringförmigen Grundkörper 310 ändert.

Die Gestaltung des Spannrings kann je nach Anwendung variieren. Dabei ist es grundsätzlich sinnvoll den Rotor an mehreren über den Umfang symmetrisch verteilten Stützstellen abzustützen. Die Abstützstellen bilden dabei vorzugsweise die zwischen den Polschuhen des Stators angeordneten Nuten.

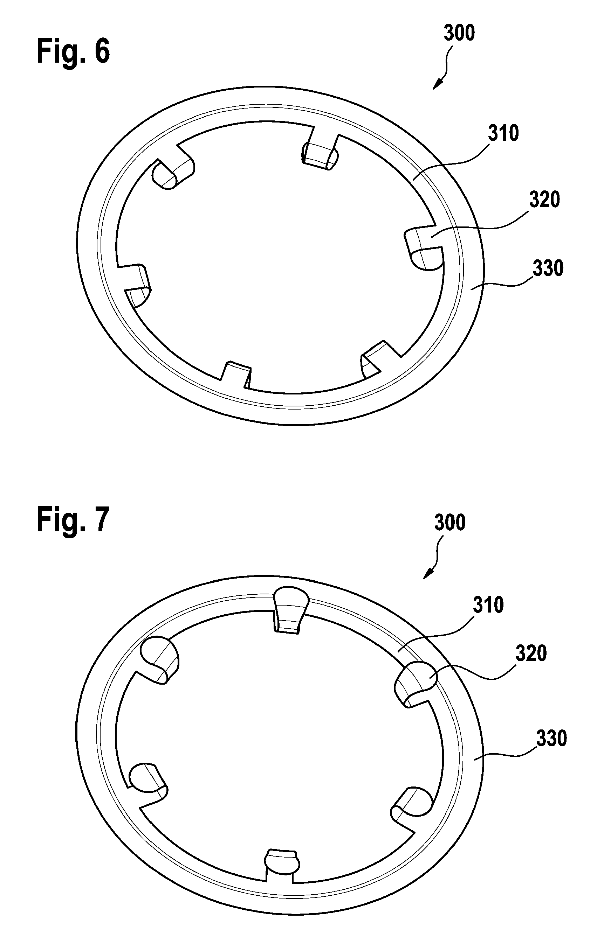

Die **Figuren 6 und 7** zeigen exemplarisch die Spannscheibe der in der Figur 1 dargestellten elektrischen Maschine. Die mittels geeigneter Umformungsprozesse aus einem Federstahl gebildete Spannscheibe 300 weist dabei einen ringförmigen Grundkörper 310, ein entlang des Außenumfangs des Grundkörpers verlaufendes kragenförmiges Spreizelement 330 sowie insgesamt sechs gleichmäßig entlang des inneren Umfangs des Grundkörpers verteilt angeordnete Federelemente 320 auf. Die sich in axialer Richtung erstreckenden Federelemente 320 sind dabei in Form von aus dem ringförmigen Rundkörper entspringenden und um ca. 180° gebogenen Blechlaschen ausgebildet. In der Figur 7 ist die Unterseite der Spannscheibe 300 mit den sich nunmehr axial nach oben erstreckenden Federelementen dargestellt.

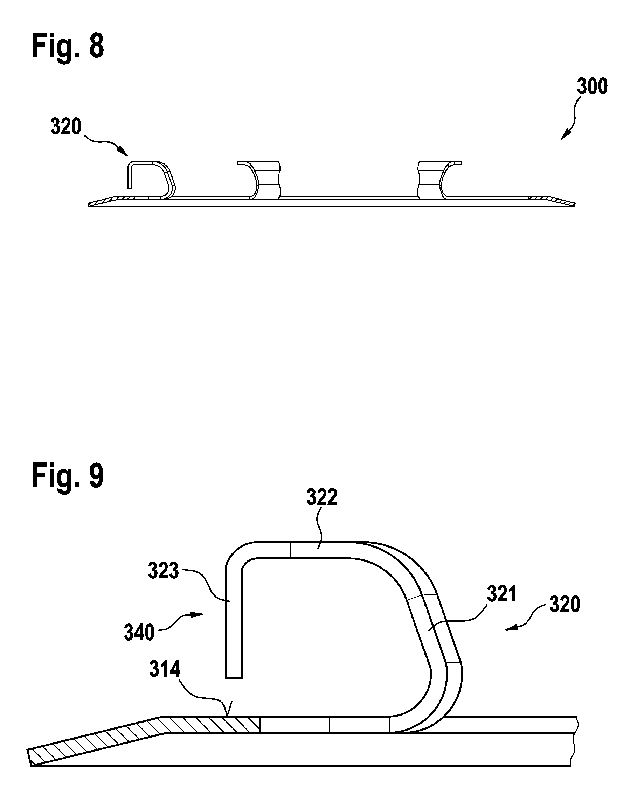

Um das Durchbiegen der Federelemente 320 zu begrenzen, können entsprechende Begrenzungselemente vorgesehen sein. Ein solches Begrenzungselement lässt sich beispielsweise in Form eines in Richtung des ringförmigen Grundkörpers gebogenen Endabschnitts einer Federstruktur ausbilden. Die Figur 8 zeigt einen Querschnitt durch eine Spannscheibe 300 mit einem solchen Begrenzungselement. Wie aus der **Figur 9** ersichtlich ist, die eine Detailansicht des Federelements 320 aus der Figur 8 zeigt, ist das Begrenzungselement 340 durch einen Endabschnitt 323 des Federelements 320 gebildet, der in Richtung einer Anschlagfläche 114 des ringförmigen Rundkörpers gebogen ist. Beim Erreichen der maximalen Kompression des Federelements 320 stößt das Begrenzungselement 340 auf die Anschlagsfläche 314 und verhindert somit eine darüber hinaus gehende Kompression des Federelements 320.

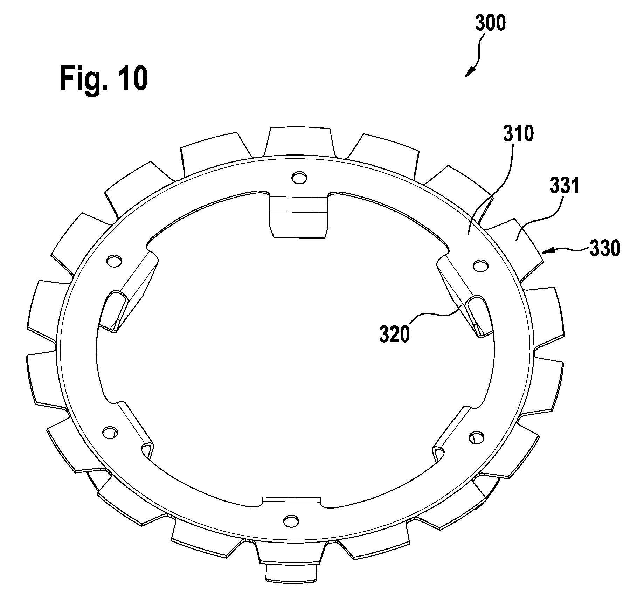

Im Folgenden werden weitere Konzepte der erfindungsgemäßen Spannscheibe dargestellt, die je nach Anwendung zum Einsatz kommen können. So können beispielsweise zur Erhöhung der Wirkung der Spreizeinrichtung 330 anstatt eines Spreizkragens mehrere entlang des Außenumfangs verteilte Spreizflügel verwendet werden. Die **Figur 10** zeigt beispielhaft eine solche Spannscheibe 300 mit insgesamt 18 sternförmig entlang des Außenumfangs des ringförmigen Grundkörpers 310 verteilten Spreizflügeln 330. Da die einzelnen Spreizflügel 330 sich unabhängig voneinander verbiegen können, ist eine höhere radiale Stauchung der Spannscheibe innerhalb des Motorgehäuses möglich. Daher können hiermit größere radiale Toleranzen des Motorgehäuses ausgeglichen werden. Die entlang des Umfangs des ringförmigen Grundkörpers vorgesehenen Bohrungen dienen der Ausrichtung der Spannscheibe während der Montage. Dies lässt sich auch mithilfe entsprechender Aussparungen im Grundkörper (hier nicht gezeigt) erreichen. Auf diese Weise lassen sich auch entsprechende Auflageflächen für Montagestempel realisieren.

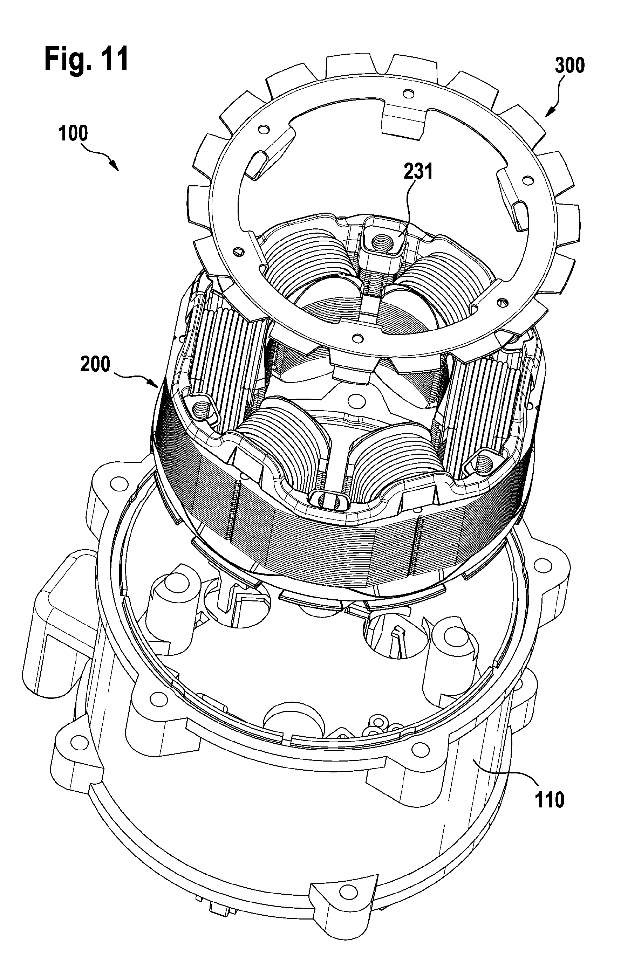

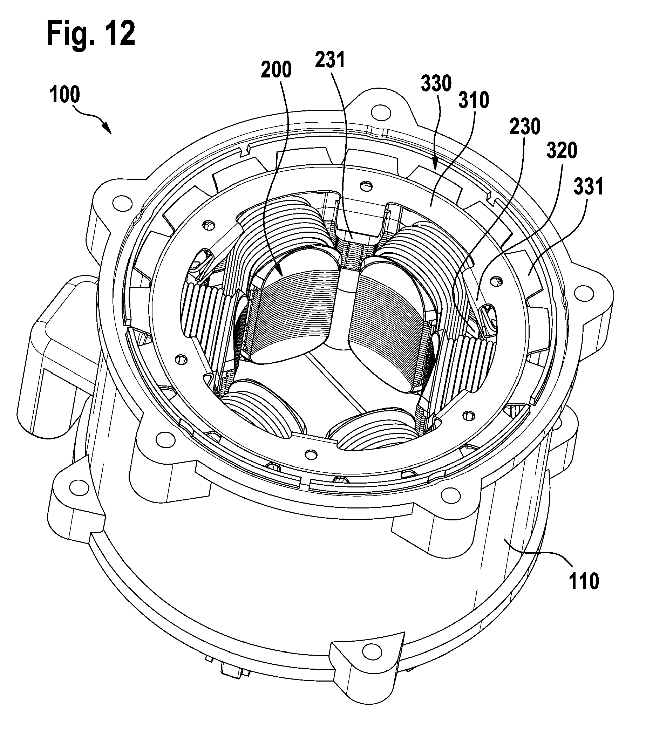

Die **Figur 11** zeigt eine explodierte Ansicht der erfindungsgemäßen elektrischen Maschine 100 mit der Spannscheibe aus der Figur 10. Die elektrische Maschine 300 umfasst ein Gehäuse 110, einen in das Gehäuse einsetzbaren Stator 200 und eine entsprechende Spannscheibe 300 zur Sicherung des Stators 200 im Gehäuse 110. Die **Figur 12** zeigt die elektrische Maschine aus der Figur 11 in zusammengesetzten Zustand. Hierbei wird ersichtlich, dass die Spannscheibe 300 den Stator 200 innerhalb der Gehäusekammer 110 mittels einer axialen Federkraft sichert. Hierzu greifen die Federelemente 320 in die Zwischenräume zwischen jeweils zwei Polschuhen 220 des Stators 200 ein. Jedes Federelement 320 drückt dabei auf eine spezielle in den Nuten 230 des Stators 200 ausgebildete Abstützfläche 231 mit einer vorgegebenen Abstützkraft. Die Spannscheibe 300 ist innerhalb des Gehäuses 110 mittels der flügelartig ausgebildeten Spreizelemente 320 befestigt, die gegen die Gehäuseinnenwand 111 elastisch vorgespannt sind. Durch die spezielle Anordnung der Spreizelemente 320 auf der dem Stator 200 abgewandten Seite des ringförmigen Grundkörpers 310, werden die Statorkräfte effektiv über die Spannscheibe 300 auf die Gehäuseinnenwand 111 abgeleitet.

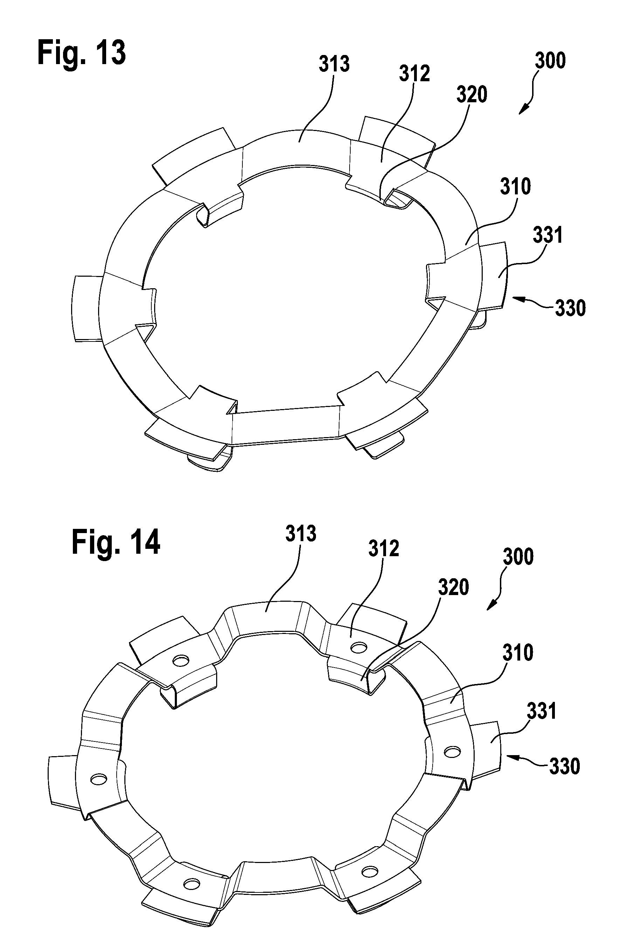

Die spezielle Ausgestaltung der Spannscheibe kann den Bedürfnissen der jeweiligen Anwendung angepasst werden. So können beispielsweise zur Verringerung des Bauraums Spannscheiben verwendet werden, bei denen die Spreizelemente in vertieften Abschnitten des ringförmigen Grundkörpers angeordnet sind. Die Figuren 13 und 14 zeigen zwei Beispiele einer solchen Spannscheibe. Dabei weist die in der **Figur 13** gezeigte Spannscheibe einen wellenartig geformten Grundkörper mit jeweils alternierenden vertieften und erhöhten Abschnitten 312, 313 auf. Die den Stator abstützenden Federelemente 320 sowie die zur Befestigung der Spannscheibe 300 dienenden Spreizelemente 330 sind dabei jeweils in den vertieften Abschnitten 312 angeordnet, die für den Eingriff in die Nuten des Stators vorgesehen sind. Im Unterschied zu der Spannscheibe aus der Figur 13 ist der ringförmige Grundkörper 310 der in der **Figur 14** gezeigten Spannscheibe stufenförmig ausgebildet. Diese Ausführungsform erlaubt einen größeren Höhenunterschied zwischen den vertieften und den erhöhten Abschnitten 312, 313.

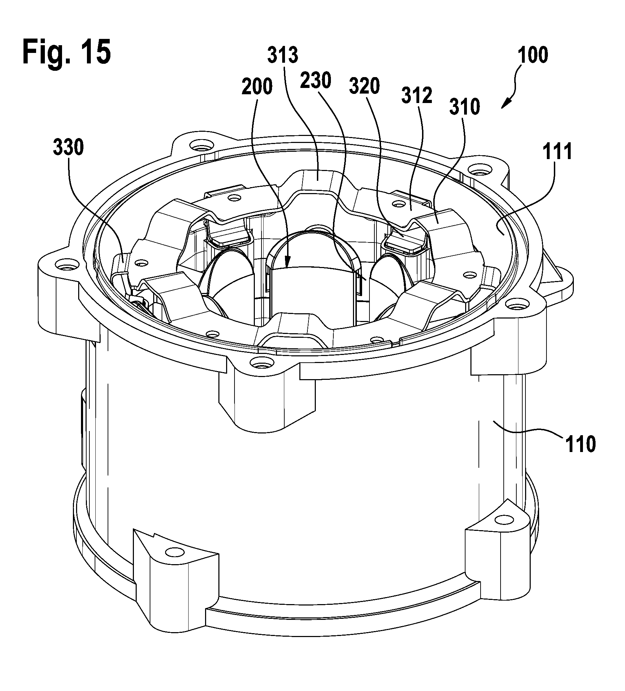

Die **Figur 15** zeigt eine erfindungsgemäße elektrische Maschine 100 mit einer entsprechend stufig geformten Spannscheibe 300. Wie aus dieser perspektivischen Ansicht ersichtlich ist, greifen die vertieften Abschnitte 312 des ringförmigen Grundkörpers 310 in die zwischen jeweils zwei Polschuhen 220 angeordneten Nuten 230 des Stators 200 ein. Die Federelemente 320 stützen den Stator dabei an geeignet ausgebildeten Abstützstellen 231 ab. Die Figur 15 zeigt eine spezielle Ausführungsform der Spannscheibe, bei der die Federelemente 320 gleichzeitig zur Befestigung der Spannscheibe 300 innerhalb des Gehäuses 110 verwendet werden. Die auf Übermaß gebogenen Federelemente 320 werden radial gestaucht in die Gehäusekammer 111 eingebracht. Die Radiale Rückstellkraft der Federelemente 320 verspannt die Spannscheibe innerhalb des Gehäuses 110.

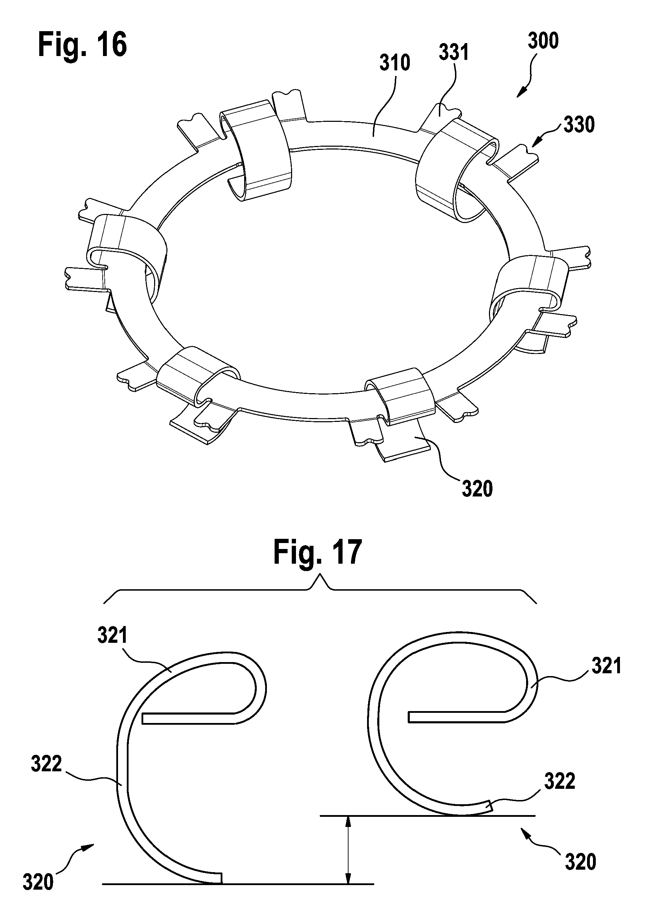

Um einen größeren Federweg zu realisieren, können spiralförmig um den ringförmigen Grundkörper 310 herum gebogene Federelemente 320 verwendet werden. Die **Figur 16** zeigt eine spezielle Spannscheibe 300 mit sechs entsprechend geformten Federelementen 220. Dabei sind die einzelnen Federelemente aus relativen langen, am Außenumfang des ringförmigen Grundkörpers 310 entspringenden Blechzungen gebildet. Die ebenfalls am Außenumfang des ringförmigen Grundkörpers 310 angeordneten Spreizelemente 330 sind in diesem Beispiel jeweils beidseitig eines Federelementes angeordnet. Die in Bezug auf die Federelemente 320 symmetrische Anordnung der Spreizelemente 330 ermöglicht eine gleichmäßigere Kraftverteilung.

Wie bereits erwähnt, erlaubt die größere axiale Ausdehnung der Federelemente 320 grundsätzlich eine größere elastische Kompression. Die **Figur 17** zeigt beispielhaft das Verhalten einer spiralförmig ausgebildeten Federstruktur 320 bei einer Stauchung, wie sie beispielsweise durch eine Bewegung des Stators 200 verursacht wird. Die im linken Teil der Figur 17 gezeigte Spiralfeder 320 umfasst dabei einen oberen Federteil 321 und einen unteren Federteil 322 und befindet sich in einem entspannten bzw. nur leicht komprimierten Zustand, wie dies beispielsweise vor der Montage der Spannscheibe der Fall ist.

Bei dieser Spiralfeder bewirkt eine axiale Belastung der Feder eine Kompression des unteren Federteils 322 und gleichzeitig eine Aufbiegung des oberen Federteils 321. Im rechten Teil der Figur 17 ist die Spiralfeder 320 im ensprechend belasteten Zustand dargestellt. Das kann beispielweise nach dem Einsetzen der Spannscheibe in das Gehäuse der Fall sein. Durch die spiralförmige Gestaltung der Feder ergibt sich eine automatische Begrenzung des maximalen Federwegs sobald der untere Endabschnitt des Federelements 320 die ringförmige Grundstruktur berührt.

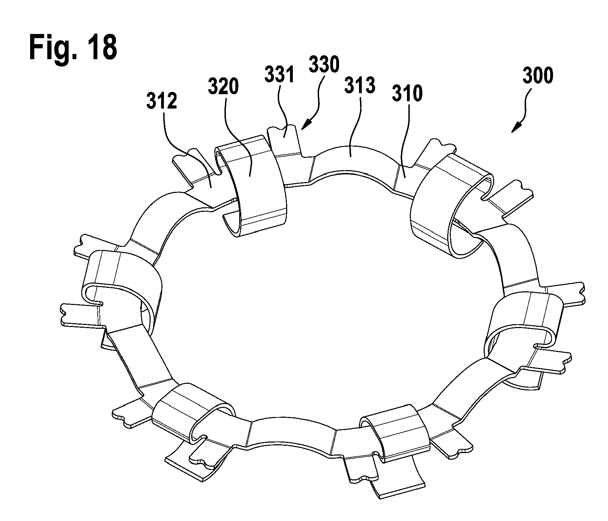

Aufgrund des in der Figur 17 illustrierten Verhaltens der Federelemente bei Belastung kann es sinnvoll sein den ringförmigen Grundkörper der in der Figur 16 gezeigten Spannscheibe zwecks Bauhöhenbegrenzung wellenartig auszubilden. Die **Figur 18** zeigt eine entsprechende Spannscheibe 300, deren ringförmiger Grundkörper 310 alternierend vertiefte und erhöhte Abschnitte 312, 313 aufweist. Die Federstrukturen 320 sowie die Spreizelemente 330 sind dabei vorzugsweise in den vertieften Abschnitten 312 des Grundkörpers 310 angeordnet.

## Patentansprüche

1. Elektrische Maschine (100) umfassend ein Gehäuse (110), einen im Gehäuse angeordneten Stator (200) und eine Spannscheibe (300), die den Stator (200) mittels einer vorgegebenen axialen Federkraft (F_{A}) in seiner Montageposition hält, wobei die Spannscheibe (300) einen mittels einer Befestigungseinrichtung (330) an einer Gehäuseinnenwand (110) befestigten ringförmigen Grundkörper (310) sowie eine Anzahl sich vom ringförmigen Grundkörper (310) in Richtung des Stators (200) erstreckender und den Stator (200) mittels der Federkraft (F_{A}) axial abstützender Federstrukturen (320) umfasst.

2. Elektrische Maschine nach Anspruch 1,
wobei die Federstrukturen (320) in Form gebogener Blechzungen ausgebildet sind.

3. Elektrische Maschine (100) nach Anspruch 1 oder 2,
wobei die Federstrukturen (320) spiralförmig um den ringförmigen Grundkörper (310) herum gebogen sind.

4. Elektrische Maschine (100) nach einem der Ansprüche 1 bis 3,
wobei die Spannscheibe (300) wenigstens ein Begrenzungselement (340) zum Begrenzen der maximalen Kompression der Federstrukturen (320) umfasst.

5. Elektrische Maschine (100) nach Anspruch 4,
wobei das Begrenzungselement (340) durch einen in Richtung des ringförmigen Grundkörpers (310) gebogenen Endabschnitt (323) der Federstruktur (320) gebildet wird, welcher beim Erreichen der maximalen Kompression auf einer Anschlagfläche (314) des ringförmigen Grundkörpers (310) zum Liegen kommt.

6. Elektrische Maschine (100) nach einem der vorhergehenden Ansprüche,
wobei die Befestigungseinrichtung (330) in Form einer entlang des Außenumfangs (311) des ringförmigen Grundkörpers (310) angeordneten Spreizeinrichtung ausgebildet ist,
wobei die Spreizeinrichtung (330) derart radial gestaucht innerhalb des Gehäuses (110) angeordnet ist, dass ein von der Spreizeinrichtung (330) auf die Gehäuseinnenwand (111) ausgeübter Druck eine Fixierung der Spannscheibe (300) im Gehäuse (110) bewirkt.

7. Elektrische Maschine (100) nach Anspruch 6,
wobei die Befestigungseinrichtung (330) mehrere sternförmig entlang des Außenumfangs (311) des ringförmigen Grundkörpers (310) angeordnete Spreizflügel (331) umfasst,
wobei die Spreizflügel (331) derart radial gestaucht innerhalb des Gehäuses (110) angeordnet sind, dass ein von den Spreizflügeln (331) auf die Gehäuseinnenwand (111) ausgeübter Druck eine Fixierung der Spannscheibe (300) im Gehäuse (110) bewirkt.

8. Elektrische Maschine (100) nach einem der vorhergehenden Ansprüche,
wobei die Spreizflügel (331) jeweils paarweise einer gemeinsamen Federstruktur (320) zugeordnet sind, die jeweils zwischen den beiden Spreizflügeln (331) angeordnet ist.

9. Elektrische Maschine (100) nach einem der vorhergehenden Ansprüche,
wobei der ringförmige Grundkörper vertiefte Abschnitte (312) aufweist, die in einen Zwischenraum (230) zwischen jeweils zwei Polschuhen (220) des Stators (200) eingreifen, und
wobei die Federstrukturen (320) in den vertieften Abschnitten (312) des ringförmigen Grundkörpers (310) angeordnet sind.

10. Elektrische Maschine (100) nach einem der vorhergehenden Ansprüche,
wobei die Spannscheibe (300) als ein mittels eines Stanzprozesses aus einem Federstahl erzeugtes Bauteil ausgebildet ist.

11. Elektrische Maschine (100) nach einem der vorhergehenden Ansprüche,
wobei die elektrische Maschine (100) als Antrieb für ein Aggregat in einem Kraftfahrzeug ausgebildet ist.

## Claims

1. Electrical machine (100) comprising a housing (110), a stator (200) which is arranged in the housing, and a conical spring washer (300) which holds the stator (200) in its assembly position by means of a prespecified axial spring force (F_{A}), wherein the conical spring washer (300) comprises an annular main body (310) which is fastened to a housing inner wall (111) by means of a fastening device (330), and also a number of spring structures (320) which extend from the annular main body (310) in the direction of the stator (200) and which axially support the stator (200) by means of the spring force (F_{A}).

2. Electrical machine according to Claim 1, wherein the spring structures (320) are designed in the form of bent sheet-metal tongues.

3. Electrical machine (100) according to Claim 1 or 2, wherein the spring structures (320) are bent around the annular main body (310) in a helical manner.

4. Electrical machine (100) according to one of Claims 1 to 3, wherein the conical spring washer (300) comprises at least one limiting element (340) for limiting the maximum compression of the spring structures (320).

5. Electrical machine (100) according to Claim 4, wherein the limiting element (340) is formed by an end section (323) of the spring structure (320), which end section is bent in the direction of the annular main body (310) and, when the maximum compression is reached, comes to rest on a stop surface (314) of the annular main body (310).

6. Electrical machine (100) according to one of the preceding claims, wherein the fastening device (330) is designed in the form of a spreading device which is arranged along the outer circumference (311) of the annular main body (310), wherein the spreading device (330) is arranged in a radially compressed manner within the housing (110) in such a way that a pressure which is exerted by the spreading device (330) on the housing inner wall (111) fixes the conical spring washer (300) in the housing (110).

7. Electrical machine (100) according to Claim 6, wherein the fastening device (330) comprises a plurality of spreading wings (331) which are arranged in the manner of a star along the outer circumference (311) of the annular main body (310), wherein the spreading wings (331) are arranged in a radially compressed manner within the housing (110) in such a way that a pressure which is exerted by the spreading wings (331) on the housing inner wall (111) fixes the conical spring washer (300) in the housing (110).

8. Electrical machine (100) according to one of the preceding claims, wherein the spreading wings (331) are associated with a common spring structure (320) in each case in pairs, the said spring structure being arranged in each case between the two spreading wings (331).

9. Electrical machine (100) according to one of the preceding claims, wherein the annular main body has recessed sections (312) which engage into an intermediate space (230) between in each case two pole shoes (220) of the stator (200), and wherein the spring structures (320) are arranged in the recessed sections (312) of the annular main body (310).

10. Electrical machine (100) according to one of the preceding claims, wherein the conical spring washer (300) is designed as a component which is produced from a spring steel by means of a stamping process.

11. Electrical machine (100) according to one of the preceding claims, wherein the electrical machine (100) is designed as a drive for an assembly in a motor vehicle.

## Revendications

1. Machine électrique (100) comprenant un boîtier (110), un stator (200) disposé dans le boîtier et une rondelle de serrage (300) qui retient le stator (200) au moyen d'une force de ressort axiale prédéfinie (F_{A}) dans sa position de montage, la rondelle de serrage (300) comprenant un corps de base (310) annulaire fixé au moyen d'un dispositif de fixation (330) à une paroi interne du boîtier (111) ainsi qu'une pluralité de structures de ressort (320) s'étendant dans la direction du stator (200) depuis le corps de base annulaire (310) et supportant axialement le stator (200) au moyen de la force de ressort (F_{A}).

2. Machine électrique selon la revendication 1,
dans laquelle les structures de ressort (320) sont réalisées sous la forme de langues de tôle de forme courbe.

3. Machine électrique (100) selon la revendication 1 ou 2,
dans laquelle les structures de ressort (320) sont recourbées en spirale autour du corps de base annulaire (310).

4. Machine électrique (100) selon l'une quelconque des revendications 1 à 3,
dans laquelle la rondelle de serrage (300) comprend au moins un élément de limitation (340) pour limiter la compression maximale des structures de ressort (320).

5. Machine électrique (100) selon la revendication 4,
dans laquelle l'élément de limitation (340) est formé par une portion d'extrémité (323) de la structure de ressort (320) de forme courbe dans la direction du corps de base annulaire (310), laquelle portion d'extrémité, une fois la compression maximale atteinte, vient se placer sur une surface de butée (314) du corps de base annulaire (310).

6. Machine électrique (100) selon l'une quelconque des revendications précédentes,
dans laquelle le dispositif de fixation (330) est réalisé en forme de dispositif d'écartement disposé le long de la périphérie extérieure (311) du corps de base annulaire (310),
dans laquelle le dispositif d'écartement (330) est disposé à l'intérieur du boîtier (110) de manière comprimée radialement de telle sorte qu'une pression exercée par le dispositif d'écartement (330) sur la paroi interne du boîtier (111) provoque une fixation de la rondelle de serrage (300) dans le boîtier (110).

7. Machine électrique (100) selon la revendication 6,
dans laquelle le dispositif de fixation (330) comprend plusieurs ailes d'écartement (331) disposées en forme d'étoile le long de la périphérie extérieure (311) du corps de base annulaire (310),
dans laquelle les ailes d'écartement (331) sont disposées à l'intérieur du boîtier (110) de manière comprimée radialement de telle sorte qu'une pression exercée par les ailes d'écartement (331) sur la paroi interne du boîtier (111) provoque une fixation de la rondelle de serrage (300) dans le boîtier (110).

8. Machine électrique (100) selon l'une quelconque des revendications précédentes,
dans laquelle les ailes d'écartement (331) sont à chaque fois associées par paires à une structure de ressort commune (320) qui est disposée à chaque fois entre les deux ailes d'écartement (331).

9. Machine électrique (100) selon l'une quelconque des revendications précédentes,
dans laquelle le corps de base annulaire présente des portions renfoncées (312) qui viennent en prise dans un espace intermédiaire (230) entre deux pièces polaires respectives (220) du stator (200), et
dans laquelle les structures de ressort (320) sont disposées dans les portions renfoncées (312) du corps de base annulaire (310).

10. Machine électrique (100) selon l'une quelconque des revendications précédentes,
dans laquelle la rondelle de serrage (300) est réalisée sous forme de composant produit à partir d'un acier à ressort au moyen d'un processus d'estampage.

11. Machine électrique (100) selon l'une quelconque des revendications précédentes,
dans laquelle la machine électrique (100) est réalisée en tant qu'entraînement pour un groupe dans un véhicule automobile.
